# EUROPEAN PATENT APPLICATION

(11) **EP 2 720 148 A1**
(43) Date of publication of application: **16.04.2014**
(21) Application number: 12188181.7
(22) Date of filing: 11.10.2012
(51) Int. Cl.: G06F 9/54

(54) **Method and computer program product for event notification in a workflow management platform**

(71) Applicant: Agfa Healthcare, 2640 Mortsel (BE)
(72) Inventor: Debels, Olivier, 2640 Mortsel (BE); Adriaensens, Roel, 2640 Mortsel (BE)

(57) **Abstract**

In a clustered workflow management platform wherein each client is able to configure one or more individual task lists by generating a query for each individual task list, clients are notified of an event affecting data as follows:
- in a notification engine data affected by the event are matched with all queries generated by all clients;
- the notification engine selects clients that have generated at least one query that matches with data affected by the event; and
- the notification engine sends notification messages on the event only to clients selected to have at least one query that matches with data affected by the event.

## Description

### Field of the Invention

The present invention generally relates to clustered workflow management platforms with client-server architecture, and more particularly to a scalable solution for event notification therein.

### Background of the Invention

A clustered workflow management platform allows to manage the different tasks to be performed by a large group of users. A clustered workflow management platform may for instance be used in medical applications such as radiology where a technician makes medical images of a patient (e.g. an x-ray scan, a CT scan, an MRI scan, un ultrasound scan, etc.), a radiologist interprets the medical images, a transcriptionist produces a report reflecting the radiologists' interpretation, and a clinician receives the report and advices the patient. The users of the clustered workflow management platform may be working at a single facility (e.g. a hospital or imaging centre) or they may be working at different locations (e.g. a hospital or enterprise with multiple facilities, a private cabinet, at home, etc.).

In such clustered workflow management platform with client-server architecture, clients configure task lists using a query builder. When generating a query, a client specifies its interests, i.e. the tasks of interest and the data fields of interest. The clients desire to be informed whenever data of interest becomes available on the server or whenever data of interest are changed.

Existing client-server applications wherein the client desires to be notified when certain data become available on the server or when certain data on the server are changed require automatic or manual refresh operations to reload data. Such solutions with refresh mechanism are disadvantageous in large scale platforms with hundreds of users because simultaneous or nearly-simultaneous reload requests are generated by hundreds of clients. This results in unacceptable network load and slow application response in case certain users connect to the server over small bandwidth networks, e.g. radiologists or clinicians that connect to the server from their home office. Moreover, a large number of these reload requests lead to unnecessary refreshes since no data of interest are changed/added on the server since the last reload request from the same client.

It is an objective of the present invention to disclose a clustered workflow management platform with client-server architecture that overcomes the above-mentioned disadvantages of existing solutions. More particularly, it is an objective of the present invention to disclose a computer-implemented notification mechanism for clients in a clustered workflow management platform that minimizes the network load, avoids unnecessary data transfers, is highly scalable and consequently supports clustering.

### Summary of the Invention

According to the present invention, the above defined objectives are realized by a method of operating a data processing system with client-server architecture to notify clients on an event affecting data in a clustered workflow management platform wherein each client is able to configure one or more individual task lists by generating a query for each individual task list, the method being defined by claim 1 comprising the steps of:
- matching in a notification engine data affected by the event with all queries generated by all clients;
- selecting by the notification engine clients that have generated at least one query that matches with data affected by the event; and
- sending by the notification engine notification messages on the event only to clients selected to have at least one query that matches with data affected by the event.

Thus, the present invention concerns an intelligent notification mechanism wherein the client expresses its interest through query building for task list generation. A notification engine knowledgeable on all configured task lists uses the query information to asynchronously and selectively notify clients exclusively on events of interest to them. As such, each client receives only notifications of interest to it. The publishers do not need to know the clients notified and similarly, the clients do not need to know the publishers of events. The decoupling of publishers and clients allows for a greater scalability. Irrespective of the server where the event occurs as a result of which data are changed/added, the clustered servers shall cooperate to notify all interested clients on the event. Further, the asynchronous notification reduces the network load and avoids unnecessary refresh operations. This will lead to more optimized use of available network resources and a faster application response, in particular when connectivity is established over small bandwidth networks.

Optionally, as defined by claim 2, a notification message on an event sent to a client may contain only data requested by the client.

Indeed, by limiting the data sent to clients selected for notification of an event to particular data fields requested at user level through query building, the data traffic imposed on the network is further reduced. The notification messages in other words can be filtered based on a match with the configured task lists, and the data content of these notification messages, can further be filtered based on the attributes of interest to the client as specified in the matching query.

Further optionally, as defined by claim 3, the steps of matching data, selecting clients and sending notification messages may be executed only when the event is of a certain class.

Thus, in order to further reduce the load on the network, a notification message may only be sent to interested clients selected on the basis of query configuration data when the event belongs to a particular class of events. Hence, the type(s) of events for which notification messages are sent to interested clients may be restricted.

In addition to a method as defined by claim 1, the present invention also relates to a corresponding data processing system as defined by claim 4, comprising means for carrying out such method.

Further, the present invention also relates to a corresponding computer program as defined by claim 5, comprising software code adapted to perform such method.

The present invention in addition also relates to a corresponding computer readable storage medium as defined by claim 6, comprising the computer program.

### Brief Description of the Drawings

Fig. 1 shows a clustered workflow management system wherein an embodiment of the event notification method according to the present invention is implemented.

Fig. 2 shows the client and server functional blocks in the system of Fig. 1, enabling to implement an embodiment of the event notification method according to the present invention.

Fig. 3 illustrates installation of the server part of the notification engine in the clustered workflow management system of Fig. 1;

Fig. 4 illustrates in more detail the client functional blocks in the system of Fig. 1, enabling to subscribe for the event notification method according to the present invention; and

Fig. 5 illustrates an embodiment of the event notification method according to the present invention, as implemented in the system of Fig. 1.

### Detailed Description of Embodiment(s)

It is a major challenge for client-server applications used in large scale systems with hundreds of users to establish an intelligent notification mechanism which allows high-performing real-time data updates with all clients. In most client-server applications there are use cases where clients need to be informed when certain data becomes available on the server or when certain data has changed. Clients must be informed as soon as possible with minimal impact on the network load and without a need for automatic or manual refresh operations on the client.

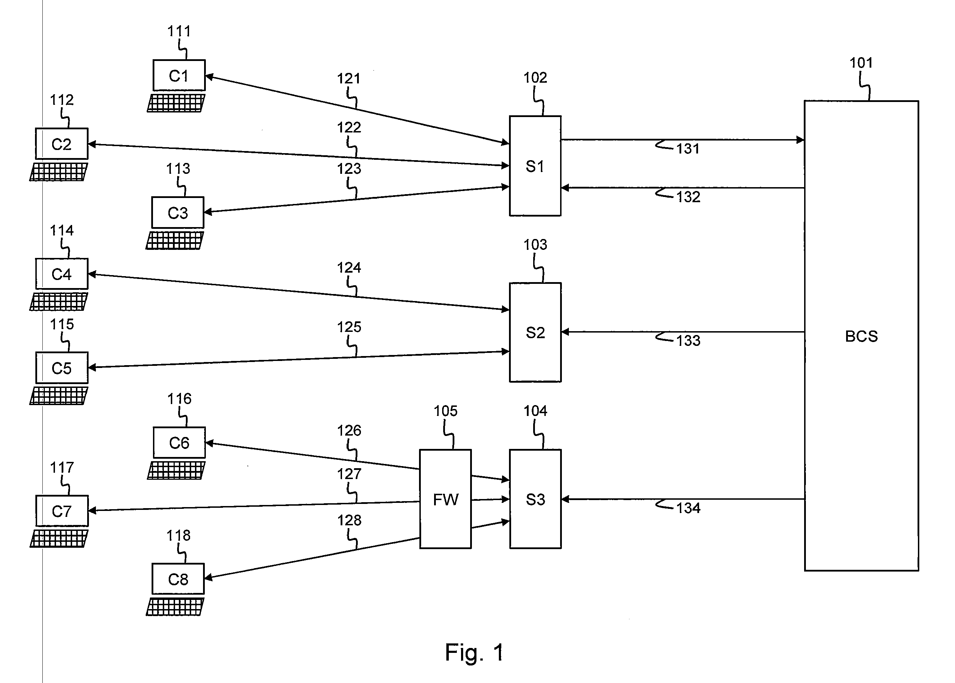

Fig. 1 illustrates a client-server application for management of medical workflows incorporating a workflow engine creating tasks for the different users of the system. These tasks are shown in task lists at the client side. The task lists and the data fields shown in the task lists can be configured at user level. A user configures a task list using a generic query builder. The query builder in other words allows the user to extensively configure the data content he/she wishes to view in each task list providing maximum flexibility at user level.

The clustered workflow management system drawn in Fig. 1 contains a broadcasting server, 101 or BCS, a number of clustered servers, 102 or S1, 103 or S2, 104 or S3, and hundreds of clients like 111 or C1, 112 or C2, 113 or C3, 114 or C4, 115 or C5, 116 or C6, 117 or C7 and 118 or C8, either connected directly or via a firewall, FW or 105, to one of the servers S1, S2, S3. The broadcasting server 101 or BCS may for instance be implemented through a Java Message Server.

As is indicated by 121, 122, 123, 124, 125, 126, 127 and 128 in Fig. 1, all clients C1-C8 create a connection to a node S1-S3 of the clustered workflow management platform, eventually passing firewalls like FW. This may for instance be a WebSocket connection. Each of the clients C1-C8 creates one or more task lists via a generic query builder enabling the client to specify which topics (or tasks) and what content (or data fields) it is interested in. When a topic changes, all interested clients need to be notified of the change. The notification engine in the clustered workflow management system of Fig. 1 thereto implements a publish-subscribe mechanism. Clients C1-C8 express interest in certain topics using a generic query builder to build up one or more task lists. The notification engine that is knowledgeable on all configured task lists, uses this information to selectively push data only to the interested clients, and preferably provides them with an update of only those data fields requested at user level. As such, clients C1-C8 shall only receive notification messages that are of their interest, without any real knowledge of the publishers. Similarly, the publishers don't have to know which clients shall receive notification messages.

In Fig. 1 for instance, it is assumed that server S1 becomes the publisher of an event that it desires to distribute to a destination such that interested clients become notified. As is indicated by arrow 131, the event and the destination are encapsulated in a message that is sent to broadcasting server BCS or 101. The latter BCS 101 thereupon forwards the message to all servers in the clustered system, as is indicated by arrows 132, 133 and 134 in Fig. 1. As a result, the nodes S1, S2 and S3 all become aware of the event and the data created/changed as a result of the event. Each server S1-S3 shall match the data changed as a result of the event with the data of interest to clients connected to the server. The data of interest to these clients is known from the earlier received task list queries. As a result of the matching, each server shall be able to decide to which clients the event has to be published. The event, eventually restricted to the data fields of interest at user level, shall be notified to the interested clients by the servers S1-S3 via the connections 121-128.

The process of selecting clients for reception of notification messages and the corresponding processing is called filtering. The server part of the notification engine according to the present invention supports a hybrid filtering system wherein messages can be filtered based on topic (configured task list) and based on content attributes (configured data fields of interest within a task list). The data content returned as part of a notification message to a client for a task list update hence will be limited to the information requested at user level.

It is noticed that the decoupling of publishers of events and subscribers to the notification service allows for greater scalability and promotes usage of loosely coupled components. The notification engine operating as described here above can be used in a clustered environment, and consequently is optimized for applications with a large user base.

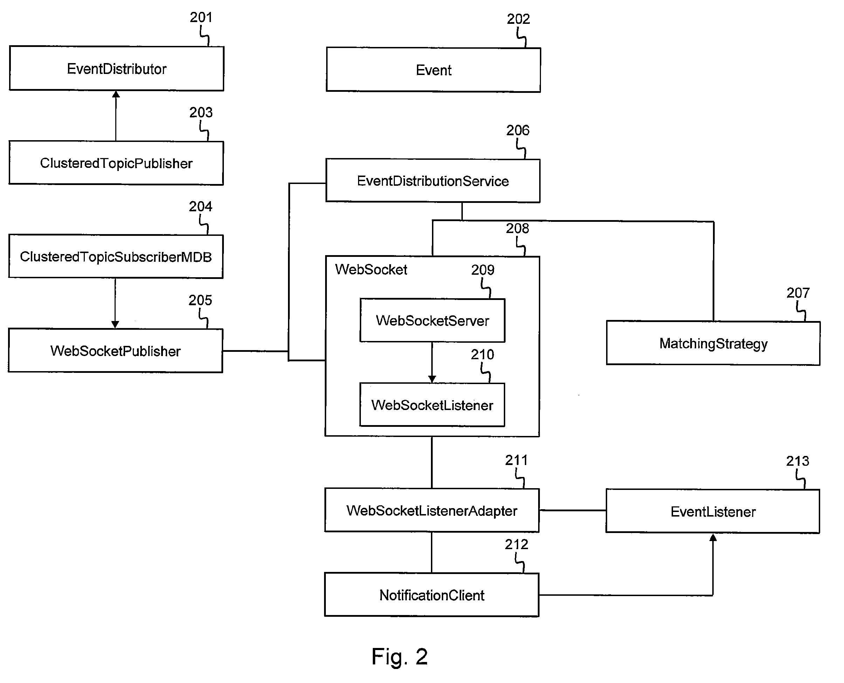

It is further noticed that the notification engine according to the present invention, which will be described in further detail with reference to Fig. 2 below, preferably is built with standard libraries, e.g. a Java development platform, allowing easy reuse in other client-server applications. It is advantageous in the fact that it combines the use of a generic query builder to configure task lists with filtering notification messages based on the same configuration data.

Fig. 2 illustrates the different functional blocks of the notification engine incorporated in the system of Fig. 1. This notification engine consists of a server part, i.e. 201-210, and a client part, i.e. 211-213, that are implemented on top of for instance WebSockets.

At the server side, two classes are needed in order to be able to distribute events: the EventDistributor class 201 and the Event class 202. The Event class 202 encapsulates the event being sent and is composed of the actual content or payload of the event and optional properties that allow clients to filter events. The EventDistributor class 201 is an interface that allows distribution of an event to a certain destination.

The server part of the notification engine further comprises the following classes: ClusteredTopicPublisher 203, ClusteredTopicSubscriberMDB 204, WebSocketPublisher 205, EventDistributionService 206, MatchingStrategy 207 and WebSocket 208, the latter being composed of WebSocketServer 209 and WebSocketListener 210. The functionality of each of these classes is described in more detail below. From the functional description below, a person skilled in the art of object-oriented software programming for client server applications will be able to develop embodiments of these classes that jointly result in a notification engine operating according to the principles of the present invention.

ClusteredTopicPublisher 203 is an Enterprise JavaBean (EJB) that implements EventDistributor 201. ClusteredTopicPublisher 203 encapsulates an event and its destination and publishes it. It is a cluster-aware implementation of EventDistributor 201 installed on BCS 101 that supports multicasting events when multiple servers cooperate in a clustered environment.

ClusteredTopicSubscriberMDB 204 is a Message-Driven Bean (MDB), i.e. an Enterprise JavaBean that asynchronously processes messages, installed on each node S1-S3 of the clustered platform and responsible for publishing the event to all interested connected clients. ClusteredTopicSubscriberMDB listens to events reported by BCS 101.

WebSocketPublisher 205 is a Managed Bean (MBean) that sets the EventDistributionService 206 as a plugin into the WebSocket layer of the nodes S1-S3.

EventDistributionService 206 is a class responsible for the filtering and publishing of events in a node, e.g. S1. It is configured with MatchingStrategy 207 to do the event filtering and it uses WebSocketServer 209 of the WebSocket class 208 as a publisher of the events to interested clients. The MatchingStrategy class 207 implements a strategy to determines whether or not there is a match between the properties of the event as received from the publisher and the properties configured by the clients that subscribed to the notification service. One or more default matching strategies may be implemented.

The above described classes collaborate to allow users of the notification engine to distribute events over connections to clients, e.g. WebSocket connections. For the sake of completeness, each implementation of the WebSocket protocol 208 consists of a WebSocketServer 209 and a WebSocketListener 210.

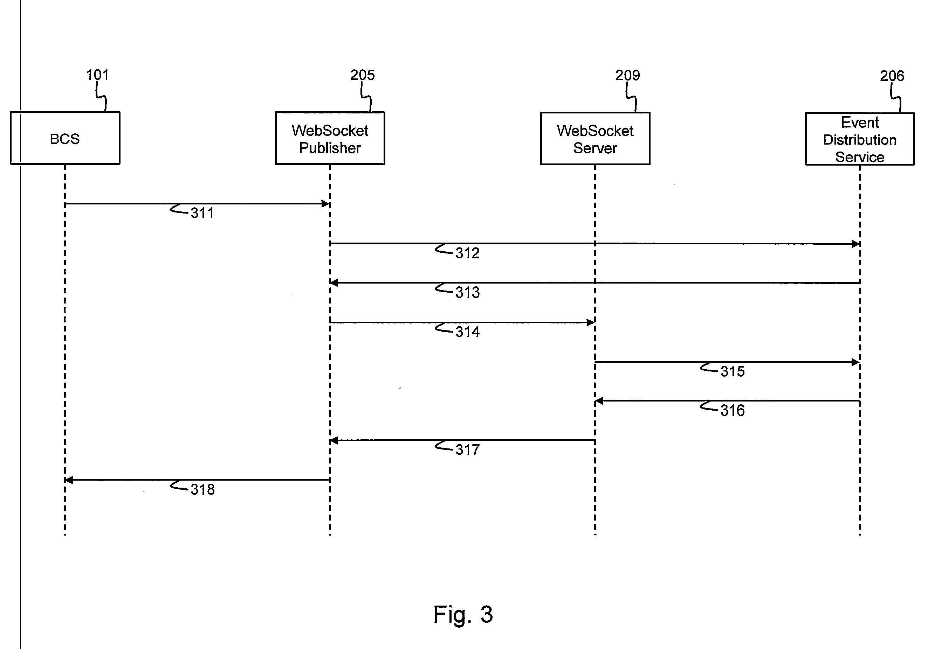

Fig. 3 illustrates initialization of the notification engine using the above defined classes. At start-up, as is indicated by arrows 311 and 312, BCS 101 instructs WebSocketPublisher 205 to create the EventDistributionService 206 for each node. The created EventDistributionService is returned as a parameter as is indicated by arrow 313. Once the EventDistributionService 206 is instantiated, the WebSocketServer 209 is created. Thereto, the EventDistributionService is inserted as parameter in message 314. As is further denoted by arrow 315, the EventDistributionService 206 is configured as a plugin in the created WebSocket layer which is given as a parameter in message 315.

Returning to Fig. 2, the client part of the notification engine incorporated in the system of Fig. 1 consists of the following classes: WebSocketListenerAdapter 211, NotificationClient 212 and EventListener 213. Installation of the client API is rather simple: one only needs to implement an EventListener 213 and use it to create a NotificationClient 212. How this NotificationClient 212 is implemented, whether every NotificationClient uses a new connection or whether it multiplexes over the same connection is transparent to the user.

WebSocketListenerAdapter 211 is an adapter for the WebSocketListener interface 210. It receives objects and strings from the WebSocket interface and forwards them to the EventListener 213 and constitutes an abstraction layer for communication with the client.

EventListener 213 is the interface that a client has to implement to receive events. All notifications are done by sending serialized objects from client to server. At the server side, events are published consisting of payload (or topic) and properties. At the client side, one receives an object. Due to the limitations of OSGI (Open Services Gateway Initiative framework), this may happen under the form of an array of bytes or a string.

NotificationClient 212 represents the subscription the client has with the server. It is constructed using a builder that can be configured with attributes like host, port, destination, ...

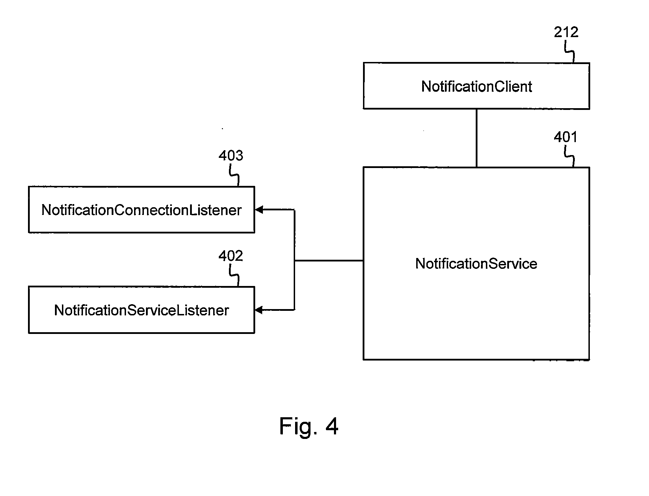

Next to the NotificationClient 212, which allows controlling individual connections, also a NotificationService 401 is made available to applications to ease the integration. The NotificationService 401 makes use of the NotificationClient 212 as is illustrated by Fig. 4.

The NotificationService 401 exposes an interface that can be used to subscribe for events from a certain class: NotificationServiceListener 402. This way, applications will receive only events of a type they are interested in. Next to adding and removing these event listeners, the NotificationService 401 exposes also methods for adding or updating the notification subscription: the NotificationConnectionListener 403. Updating the notification subscription is done without the need to set up a new connection. Multiple task lists share the same connection and subscriptions can be updated without the need to re-establish the connection. Whenever the connection to the server is lost, the NotificationClient 212 will try to re-establish the connection and will inform the application whether this was successful or not. This allows the application to take compensating actions for the lost connection. Even if the connection could be re-established, the client might want to do a re-query to be sure that all information is up-to-date. When the NotificationService 401 establishes or re-establishes a connection to the server, the current cluster topology is taken into account. The NotificationService 401 iterates over all nodes until a connection could be established. If no connection could be established, the broken connection dialog is shown to the user.

It is noticed that the main difference between the NotificationClient 212 and the NotificationService 401 resides in that the NotificationClient 212 represents a single connection to a single server. There are methods for setting the host and port to connect to. The NotificationService 401 does not have such methods as the implementation retrieves the actual cluster topology from the client side EJB interceptor stack.

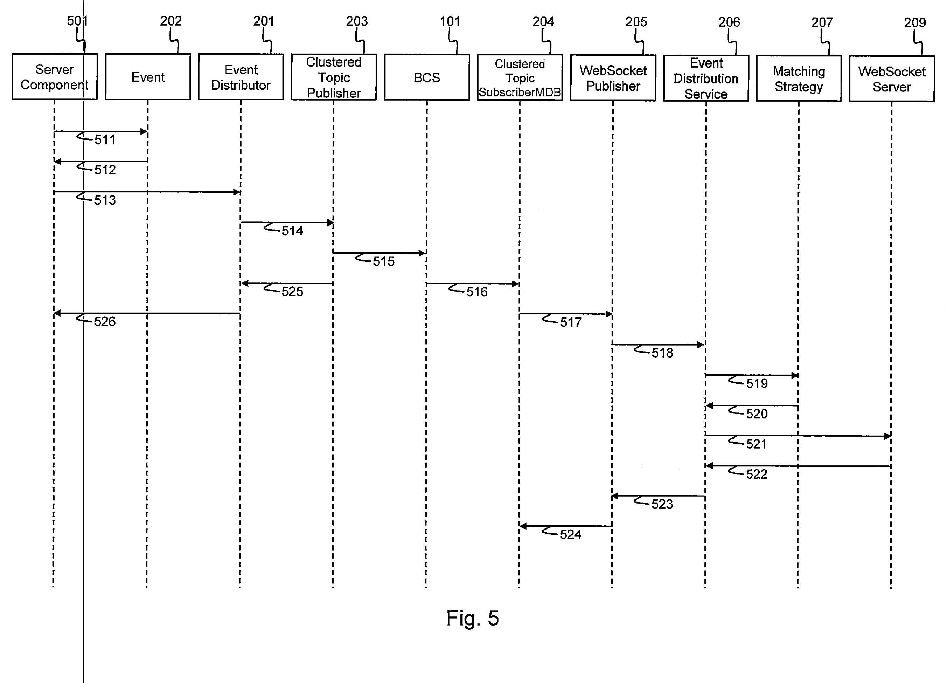

Fig. 5 at last shows the sequence of messages when the notification method according to the present invention is executed. As is indicated by 511, the server component 501 of the notification engine requests the Event class 202 to encapsulate the event. The encapsulated event is returned in 512. Thereupon, through message 513, the server component 501 requests the Event Distributor 201 to distribute the event to the different clustered nodes. The cluster-aware implementation of EventDistributor 210, i.e. ClusteredTopicPublisher 203 is then asked in 514 to multicast the event. ClusteredTopicPublisher 203 thereto forwards the event in 515 to BCS 101 which forwards the event to ClusteredTopicSubscriberMDB 204 in each node of the clustered platform, as is indicated by 516. In the nodes, WebSocketPublisher 205 sets EventDistributionService 206 as a plugin in the WebSocket layer of that node, and EventDistributionService 206 is requested to filter and publish the event as respectively indicated by arrows 517 and 518 in Fig. 5. In 519, EventDistributionService 206 calls MatchingStrategy 207 to determine if matches exist between the event and the task list queries received from clients. The result of the matching is returned in 520. The EventDistributionService 206 thereupon requests the WebSocket Server 209 of that node in message 521 to distribute the event to the clients. WebSocket Server 209 distributes the event and reports back to the EventDistributionService 206, WebSocketPublisher 205 and ClusteredTopicSubscriber MDB via the message sequence 522, 523 and 524.

In summary, the present invention offers a high performing and scalable notification engine based upon the use of a generic query builder whose configuration data are used for filtering client messages. As a result, only those clients having an interest in the update are triggered. Preferably, client specific data content delivery further limits the impact of notification on the network data traffic. The notification engine supports clustering and is highly scalable due to the decoupling of event publishers and notification subscribers. Advantageous implementations which use HTTP for triggering client notification messages, are firewall friendly enabling to notify also clients hosted behind firewalls, e.g. users that work from their home office.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method of operating a data processing system with client-server architecture to notify clients on an event affecting data in a clustered workflow management platform wherein each client is able to configure one or more individual task lists by generating a query for each individual task list, said method comprising the steps of:
- matching in a notification engine data affected by said event with all queries generated by all clients;
- selecting by said notification engine clients that have generated at least one query that matches with data affected by said event; and
- sending by said notification engine notification messages on said event only to clients selected to have at least one query that matches with data affected by said event.

2. A method according to claim 1, wherein a notification message on said event sent to a client contains only data requested by said client.

3. A method according to claim 1, wherein said steps of matching data, selecting clients and sending notification messages are executed only when said event is of a certain class.

4. A data processing system comprising means for carrying out the method of any of claims 1 to 3.

5. A computer program comprising software code adapted to perform the method of any of claims 1 to 3.

6. A computer readable storage medium comprising the computer program of claim 5.
